# EUROPEAN PATENT APPLICATION

(11) **EP 1 793 464 A1**
(43) Date of publication of application: **06.06.2007**
(21) Application number: 05425864.5
(22) Date of filing: 02.12.2005
(51) Int. Cl.: H02G 3/06, H02G 3/04

(54) **A quick-fit connecting device for mesh cable trays**

(71) Applicant: Legrand S.p.A., 20080 Zibido San Giacomo (Milano) (IT)
(72) Inventor: Garassino, Luca, 15067 Novi Ligure (Alessandria) (IT); Finco, Alan, 15047 Spinetta Marengo (Alessandria) (IT)
(74) Representative: Rondano, Davide

(57) **Abstract**

The device (10; 110; 210) is constructed as a single sheet-metal component forming integrally a base plate (12; 112; 212) which is elongate in the longitudinal direction relative to the tray (1, 2) and locking means (16, 18, 20, 22, 26; 114, 115, 116, 118, 120, 122, 126; 226) suitable for longitudinally and transversely locking at least one horizontal or vertical portion (6, 7) of a transverse wire (5) of the tray. The locking means include at least one seat (16, 18, 20, 22; 120, 122; 226a) suitable for housing the portion (6, 7) of transverse wire (5) and for locking it longitudinally in both directions and transversely on the side of the base plate (12; 112; 212), and at least one locking tab (26b; 126b; 226b) arranged to be turned by plastic deformation to a locking position in which it locks the portion (6, 7) of transverse wire (5) transversely on the side remote from the base plate (12; 112; 212). According to the invention, the at least one locking tab (26b; 126b; 226b) is part of a locking tongue (26, 126; 226) formed integrally by the connecting device (10). Moreover, the locking tongue (26; 126; 226) comprises a shank portion (26a; 126a; 226a) which is connected at a first of its ends to the base plate (12; 112; 212), and from the opposite end of which the at least one locking tab (26b, 126b; 226b) extends.

## Description

The present invention relates to a quick-fit connecting device for mesh cable trays as specified in the preamble to Claim 1.

Mesh cable trays comprising a plurality of longitudinal and transverse wires connected to one another to form a grid are commonly used for housing and protecting cables, particularly electrical cables. In the following description and claims the term "longitudinal" will indicate a direction parallel or substantially parallel to the direction in which the tray extends and the term "transverse" will indicate a direction in a plane perpendicular to the direction in which the tray extends. The transverse wires of a mesh cable tray generally include a horizontal base portion and a pair of vertical side portions which extend from the opposite ends of the base portion so that each transverse wire is generally U-shaped.

Mesh cable trays are produced in sections of given length the opposite longitudinal ends of which are generally defined by respective transverse wires hereinafter referred to by the term "end transverse wires". In order to connect two separate mesh cable tray sections, first of all the two tray sections are brought close together longitudinally and then the adjacent end transverse wires of the two tray sections are engaged with one another by means of connecting devices fitted on their vertical and/or base portions.

A quick-fit connecting device for connecting two adjacent sections of a mesh cable tray is known from unpublished European patent application 05425370.3 in the name of the Applicant. This known connecting device is constructed as a single sheet-metal element forming integrally:
a substantially rectangular plate-shaped portion which, in the fitted condition, extends in the longitudinal direction of the tray and, on the inside of the tray, bears against the vertical portions of the two end transverse wires of the tray sections to be connected;
a pair of curved portions which project from an upper longitudinal edge of the plate-shaped portion and are shaped so as to extend at least partially around respective portions of the two aligned longitudinal wires disposed at the upper ends of the side walls of the two tray sections to be connected;
a pair of first tabs which project transversely from a central region of the plate-shaped portion and are aligned with one another in the transverse direction so as to be interposed between the vertical portions of the two end transverse wires of the tray sections to be connected in order to lock the two tray sections longitudinally in the direction towards one another;
a pair of second tabs which project transversely from the plate-shaped portion on longitudinally opposite sides of the first pair of tabs and are aligned with one another in the longitudinal direction, wherein the second tabs are disposed at a distance from the first tabs substantially equal to or slightly greater than the diameter of the transverse wires so as to define, with the first tabs, a pair of seats in which to receive the two end transverse wires and to lock the two tray sections longitudinally in the direction away from one another, and
a pair of third tabs which extend in a direction substantially parallel to the two end transverse wires so as to allow these latter to be inserted in the respective seats and which are arranged to be bent by cold plastic deformation so as to lock transversely the two end transverse wires of the tray sections to be connected, on the side remote from the plate-shaped portion.

A further example of a quick-fit connecting device for connecting two adjacent sections of a mesh cable tray is known from European patent application EP 1 451 910. According to this further known example, a quick-fit connecting device for mesh cable trays comprises a U-shaped body having a base portion and a pair of flanges which extend parallel to one another from the upper and lower end edges of the base portion. Each of the flanges has at least one pair of recesses defining at least one pair of seats suitable for receiving the vertical portions of two facing end transverse wires of the two mesh cable tray sections to be connected. Once the vertical portions of the two end transverse wires are housed in the respective seats, they are locked therein by the bending towards the centre of the body by cold plastic deformation of a pair of locking tabs formed integrally by at least one of the flanges at the sides of the recesses.

In both of the known solutions discussed above, the two end transverse wires are therefore clamped against the base plate of the connecting device with the use of respective bendable locking tabs formed directly at the sides of the recesses in which the wires are housed. In order to clamp both of the end transverse wires it is therefore necessary to bend both of the tabs with the use, for example, of a pair of pliers or another suitable tool. The operation to bend the tabs may be quite inconvenient for the operator, particularly since it has to be performed twice for each device. There is therefore a risk that a careless or unconscientious operator may forget to bend both of the tabs or may deliberately decide to bend only one of them to save time.

The object of the present invention is therefore to provide a quick-fit connecting device for mesh cable trays which can be installed even more quickly and with a smaller number of operations than those of the prior art.

This and other objects are achieved in full according to the invention by means of a connecting device having the characteristics defined in independent Claim 1.

As will be clear from the following description, a connecting device according to the invention can be connected to a mesh cable tray by means of a single bending operation and can be used both for the connection between two adjacent mesh cable tray sections and for the fitting of an accessory such as, for example, a branch box, on a mesh cable tray section.

Further characteristics and advantages of the invention will become clear from the following detailed description which is given by way of non-limiting example with reference to the appended drawings, in which:
Figure 1 is a perspective view of a quick-fit connecting device for the connection of adjacent mesh cable tray sections according to a preferred embodiment of the present invention,
Figure 2 is a perspective view which shows the connecting device of Figure 1 in a condition in which it is fitted temporarily on a pair of adjacent mesh cable tray sections,
Figure 3 is a perspective view similar to that of Figure 2, in which the connecting device is shown in a permanently fitted condition,
Figures 4 and 5 are perspective views of a quick-fit connecting device according to another preferred embodiment of the present invention, viewed from the outside and from the inside with respect to the condition in which it is fitted on a tray, respectively,
Figure 6 is a perspective view which shows the connecting device of Figures 4 and 5 in a condition in which it is fitted temporarily on a pair of adjacent mesh cable tray sections,
Figure 7 is a perspective view of a variant of embodiment of a quick-fit connecting device according to the present invention, designed for the fitting of an accessory on a mesh cable tray, and
Figure 8 is a perspective view which shows the connecting device of Figure 7 in a condition in which it is fitted permanently on a mesh cable tray section.

In the description and in the appended claims, terms such as "vertical" and "horizontal", "inside" and "outside", "upper" and "lower" should be understood as relating to the condition in which the connecting device is fitted on a mesh cable tray and, in particular, to the situation in which the device is fitted on the side walls of the tray so as to engage the vertical portions of the end transverse wires of the two adjacent tray sections to be connected. It is however clear that the connecting device may also equally well be fitted on the base of the cable tray, that is, so as to engage the horizontal portions of the end transverse wires of the two adjacent tray sections to be connected.

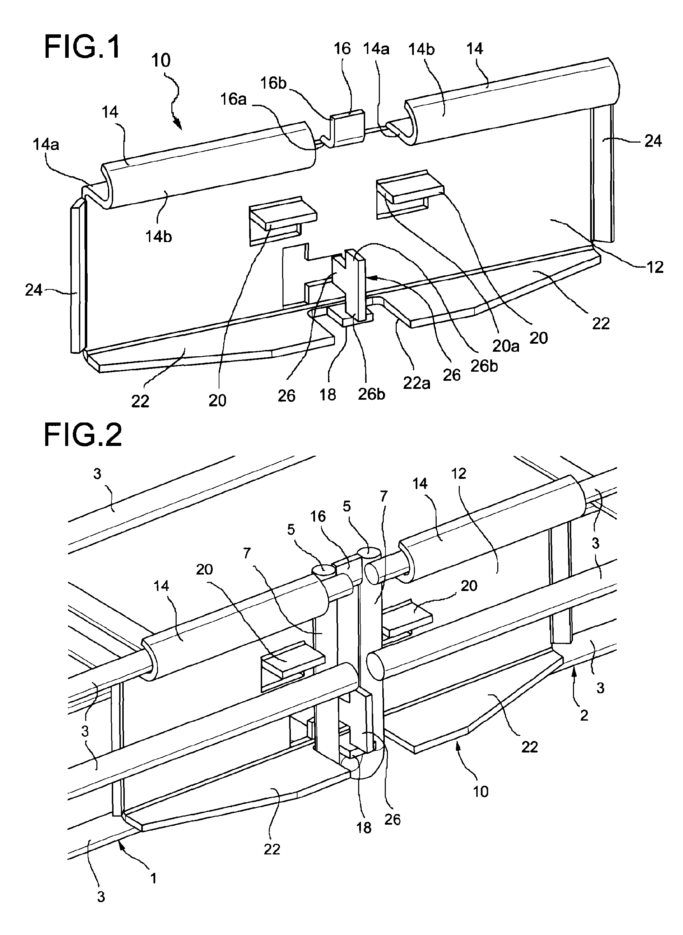

With reference initially to Figures 1 to 3, a quick-fit connecting device according to a first preferred embodiment of the invention is generally indicated 10. In this case, the connecting device 10 is arranged to interconnect a pair of adjacent mesh cable tray sections, indicated 1 and 2, respectively, each of which comprises a series of longitudinal wires 3 and a series of transverse wires 5 connected to one another to form a grid structure. Each transverse wire 5 includes, in known manner, a normally straight base portion 6 and a pair of parallel vertical portions 7 which extend from the opposite ends of the base portion 6 so that each transverse wire 5 is generally U-shaped. The base portions 6 of the transverse wires 5 and any longitudinal wires 3 connected to those portions form the base of the mesh cable tray, while the vertical portions 7 of the transverse wires 5 and any longitudinal wires 3 connected to those portions form the side walls of the mesh cable tray.

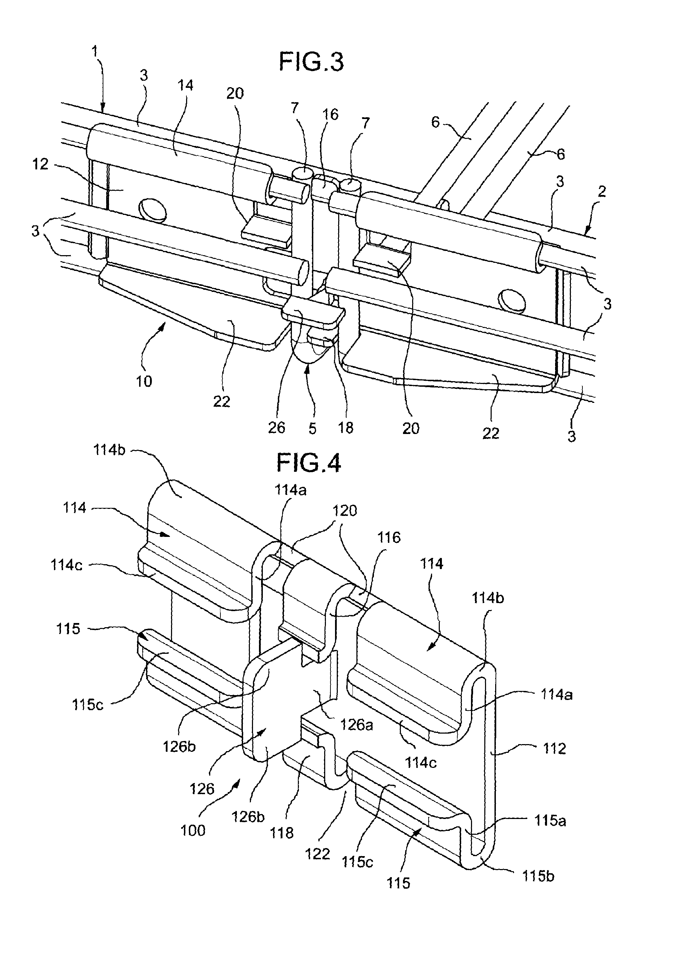

The two adjacent mesh cable tray sections 1 and 2 are connected to one another by means of two connecting devices 10 fitted on the side walls of the tray (only one of which is shown in figures 2 and 3) so as to engage the vertical portions 7 of the two end transverse wires 5 of the adjacent tray sections 1 and 2. An optional third connecting device 10 may, however, be fitted on the base of the tray so as to engage the base portions 6 of the two end transverse wires 5.

The connecting device 10 is constructed as a single sheet-metal component having a substantially symmetrical shape with respect to a transverse vertical plane of symmetry and forming integrally:
a substantially rectangular base plate 12 which, in the fitted condition, extends longitudinally relative to the tray and is disposed so as to bear against the vertical portions 7 of the two end transverse wires 5 so as to restrain these latter from the transversely inner side of the tray,
a pair of curved engagement portions 14 which project transversely from the upper longitudinal edge of the base plate 12 and are shaped so as to extend at least partially around respective portions of two aligned longitudinal wires 3 (generally the two upper end wires) of the two adjacent tray sections 1 and 2,
a pair of central tabs, that is, an upper tab 16 and a lower tab 18, which project transversely from the upper and lower longitudinal edges of the base plate 12, respectively, and are arranged to lock the relative longitudinal movement of the end transverse wires 5 of the two tray sections 1 and 2 in the direction towards one another,
a pair of lateral tabs 20 projecting transversely from the base plate 12 on longitudinally opposite sides of the central tabs 16 and 18 and arranged substantially in alignment vertically in order to lock the relative longitudinal movement of the end transverse wires 5 of the two tray sections 1 and 2 in the direction away from one another,
a pair of lower flanges 22 which are bent substantially at right angles to the base plate 12 and extend from the lower longitudinal edge thereof, on the same side as the tabs 16, 18 and 20,
a pair of lateral rims 24 projecting from the opposite longitudinal ends of the base plate 12 and bent relative thereto, and
a locking tongue 26 projecting transversely from a vertically intermediate portion of the base plate 12 on the same side as the tabs 16, 18 and 20, the tongue being arranged to restrain the vertical portions 7 of the two end transverse wires 5 on the transversely outer side of the tray, as will be better explained in the following part of the description.

As can be seen from Figures 2 and 3, the base plate 12 of the connecting device 10 advantageously has a height less than the height of the side walls of the tray. In this way, when the connecting device 10 is fitted on a side wall of the tray with the curved engagement portions 14 engaging the respective longitudinal wires 3 which delimit the side walls of the tray at the top, the lower central tab 18 and the two lower flanges 22 of the connecting device 10 are on the inside of the side wall of the tray and can thus restrain the vertical portions 7 of the end transverse wires 5 of the two adjacent tray sections 1 and 2.

The curved engagement portions 14 extend on opposite sides of the said plane of symmetry of the connecting device 10 and are arranged each to engage a longitudinal wire 3 of a respective tray section 1, 2 so as to prevent the connecting device 10 from translating vertically and rotating in the plane of the side wall of the tray. In particular, the curved engagement portions are formed by a first horizontal, flat, lower part 14a which extends substantially at right angles from the base plate 12 on the same side as the tabs 16, 18 and 20 and the lower flanges 22 and by a second, curved, upper part 14b. The curved engagement portions 14 are spaced apart and the upper central tab 16 is interposed between them so as to define, with the facing edges of those portions, a pair of seats in which to house the vertical portions 7 of the two end transverse wires 5. Naturally, it would be possible to provide a plurality of curved engagement elements distributed along the upper longitudinal edge of the base plate 12 instead of the two curved engagement portions 14.

The upper central tab 16 is formed, in this embodiment, by a first part 16a which is bent at right angles to the base plate portion 12 and by a second part 16b which extends outwardly relative to the plate portion 12 and parallel thereto from the free end of the first part 16a. The lower central tab 18, on the other hand, is formed simply by a single part which is bent at right angles to the base plate 12. As mentioned above, the two central tabs 16 and 18 have the function of locking the longitudinal movement of the two adjacent tray sections 1 and 2 towards one another, since, when the connecting device 10 is in the fitted position (Figures 2 and 3), they are interposed between the two vertical portions 7 of the end transverse wires 5, with their opposite parallel edges forming abutment surfaces for those portions.

Naturally, a greater number of central tabs may be provided. Moreover, the central tabs could be formed by vertical parts rather than horizontal parts, projecting at right angles from the base plate 12. Instead of the tabs, one or more central projections produced by plastic deformation of the base plate 12 could also be provided.

In the embodiment shown, each of the two lateral tabs 20 is formed by a single part bent at right angles to the base plate 12. The two lateral tabs 20 form, with their longitudinally facing edges, indicated 20a, respective abutment surfaces for the vertical portions 7 of the two adjacent end transverse wires 5, which abutment surfaces can lock the longitudinal movement of the two adjacent tray sections 1 and 2 away from one another. The two lateral tabs 20 are preferably but not necessarily aligned vertically. Moreover, the two lateral tabs 20 are arranged at a distance from the central tabs 16 and 18 equal to or slightly greater than the diameter of the transverse wires 5 so as to define with the central tabs 16 and 18 a pair of seats in which the vertical portions 7 of the end transverse wires 5 of the two adjacent tray sections 1 and 2 to be connected can be housed and restrained longitudinally.

Naturally, a larger number of lateral tabs may be provided. Moreover, the lateral tabs could be oriented vertically. Finally, one or more projections produced by plastic deformation of the base plate 12 could be provided instead of the tabs.

The lower flanges 22 are spaced apart and the lower central tab 18 is interposed between them so as to define with the facing parallel edges of the flanges 22, indicated 22a in Figure 2, a pair of seats in which to house the vertical portions 7 of the two end transverse wires 5. Each of the edges 22a of the lower flanges 22 is preferably aligned longitudinally with the edge 20a of one of the two lateral tabs 20 so as to form a further abutment surface for the vertical portions 7 of the two adjacent end transverse wires 5, which abutment surface can lock the longitudinal movement of the two adjacent tray sections 1 and 2 away from one another.

The locking tongue 26 projecting from the base plate 12 lies in a plane perpendicular to the base plate 12, preferably in a plane coinciding with the vertical plane of symmetry of the connecting device 10, and preferably extends from a portion of the base plate 12 which is interposed vertically between the lateral tabs 20 and the lower central tab 18. The locking tongue 26 preferably has a T-shaped configuration including a shank portion 26a which extends substantially perpendicularly relative to the base plate 12 and lies in a substantially vertical plane, and a pair of locking tabs 26b which advantageously lie in the same plane as the shank portion 26a and extend from a free end thereof, perpendicularly relative to the direction in which the shank portion 26a extends, one locking tab 26b extending in one direction (upwards, in the case described) and the other in the opposite direction (downwards, in the case described).

The connecting device 10 is produced as shown in Figure 1, that is, with the locking tongue 26b lying in a substantially vertical plane so that the vertical portions 7 of the transverse wires 5 of the two tray sections 1 and 2 to be connected can be inserted in the restpective seats described above. This fitted condition on the tray (shown in Figure 2) is a purely temporary fitted condition since the transverse wires 5 are not locked in the respective seats transversely. To achieve a permanent fitted condition (shown in Figure 3) the two locking tabs 26b are turned through a predetermined angle, for example, of about 90° by cold plastic deformation. For this purpose, it suffices for the operator to grip the tongue 26, for example, with a pair of pliers, and to twist its shank portion 26a so as to cause the two locking tabs 26b to turn in one direction or in the other. Once the two locking tabs 26b of the tongue 26 have been turned , for example, clockwise relative to the observer of Figure 2, one of them (the upper one) can restrain the transverse wire 5 of the tray section 2 (the right-hand section) and the other (the lower one) can restrain the transverse wire 5 of the tray section 1 (the left-hand section).

The connecting device according to the invention can thus be restrained firmly on both of the adjacent tray sections to be connected by the execution of a single bending, or rather twisting, operation by cold plastic deformation of the locking tongue.

According to a variant of embodiment, not shown, the locking tongue 26 may have a substantially L-shaped configuration with a single locking tab which extends perpendicularly relative to the shank portion, from the free end thereof. Clearly, however, only one of the two end transverse wires can be restrained with this variant of embodiment.

The connecting device 10 according to the invention can easily be produced from a flat semi-finished sheet-metal product by simple and inexpensive punching and bending operations which are not described in detail herein since they are within the capabilities of a person skilled in the art. It is of importance here purely to point out that the locking tongue 26, as well as the lateral tabs 20, can be produced integrally by punching and bending of corresponding portions of the base plate 12. Moreover, the locking tongue 26 can be produced by a single operation to bend it at 90 degrees to the base plate 12, whereas in the above-described prior art, the locking tabs can be produced by firstly bending an upper or lower flange or edge of the base plate at 90 degrees to the base plate and then bending each locking tab at 90 degrees to that flange or edge. Naturally this permits a simplification and a reduction in the duration of the manufacturing cycle of the connecting device.

A second preferred embodiment of the quick-fit connecting device according to the invention which is designed for low loads and is generally indicated 100 in the drawings, will now be described with reference to Figures 4 to 6.

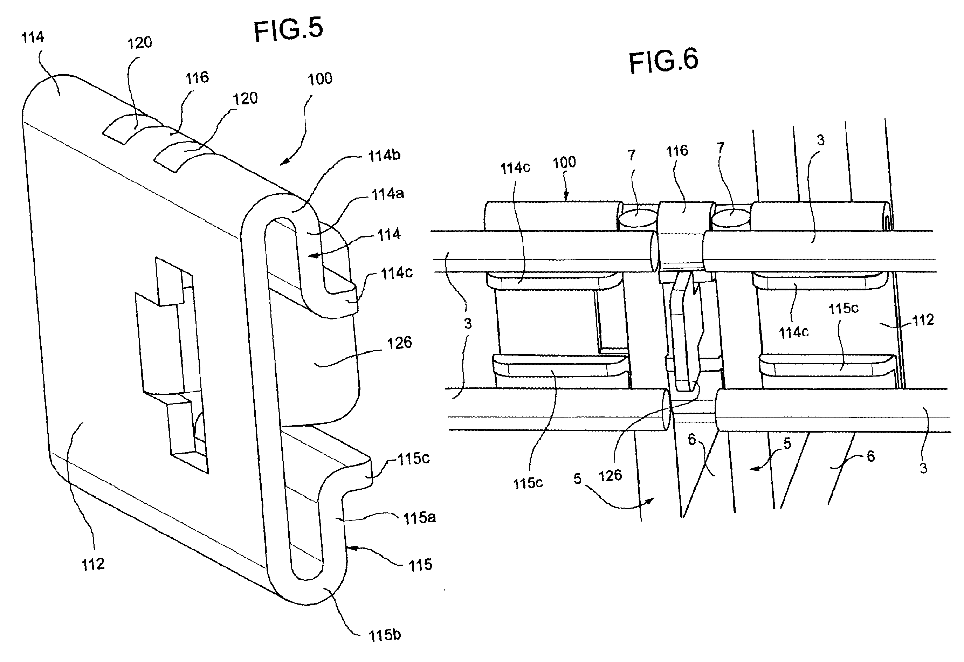

As shown in Figure 6, the connecting device 100 is arranged to interconnect two adjacent mesh cable tray sections 1 and 2 by engaging without distinction either the horizontal portions 6 or the vertical portions 7 of the respective end transverse wires 5. Also in this case, the description will be given with reference to the fitting of the connecting device 100 on a side wall of the tray.

The connecting device 100 is constructed as a single sheet-metal component having a substantially symmetrical shape with respect to a transverse vertical plane of symmetry and forming integrally:
a substantially rectangular base plate 112 which, in the fitted condition, extends longitudinally relative to the tray and is arranged inside the tray,
a pair of upper flanges 114 which extend from the upper longitudinal edge of the base plate 112 and extend transversely outwardly relative to the tray and vertically towards the centre of the base plate 112 (that is, downwards),
a pair of lower flanges 115 which extend from the lower longitudinal edge of the base plate 112 and extend transversely outwardly relative to the tray and vertically towards the centre of the base plate 112 (that is, upwards),
an upper central tab 116 which extends from the upper longitudinal edge of the base plate 112 between the two upper flanges 114 and extends transversely outwardly relative to the tray and vertically towards the centre of the base plate 112 (that is, downwards),
a lower central tab 118 which extends from the lower longitudinal edge of the base plate 112 between the two lower flanges 115 and extends transversely outwardly relative to the tray and vertically towards the centre of the base plate 112 (that is, upwards), and
a locking tongue 126 projecting transversely from the base plate 112, outwardly relative to the tray, that is, on the same side as the flanges 114, 115 and as the tabs 116, 118, the tongue being arranged to restrain the vertical portions 7 of the two end transverse wires 5 on the transversely outer side of the tray, as will be better explained in the following part of the description.

Each of the two upper flanges 114 forms a vertical flat portion 114a which extends parallel to the base plate 112, an arcuate portion 114b joining the vertical flat portion 114a and the upper longitudinal edge of the base plate 112, and a horizontal flat portion 114c which extends outwardly from the lower edge of the vertical flat portion 114a. Similarly, each of the two lower flanges 115 forms a vertical flat portion 115a which extends parallel to the base plate 112, an arcuate portion 115b joining the vertical flat portion 115a and the lower longitudinal edge of the base plate 112, and a horizontal flat portion 115c which extends outwardly from the upper edge of the vertical flat portion 115a. The dimensions and shape of the two upper flanges 114 and of the two lower flanges 115 are selected such that, in the condition in which the connecting device 110 is fitted on a side wall of the tray, the longitudinal wires 3 bear on the vertical flat portions 114a and 115a, as shown in Figure 6.

Between the upper central tab 116 and the two upper flanges 114 there are two upper seats 120, while between the lower central tab 118 and the two lower flanges 115 there are two lower seats 112, each of which is aligned longitudinally with a corresponding upper seat 120. Each pair of aligned upper and lower seats 120 and 122 is arranged to house and longitudinally restrain the vertical portion 7 of the end transverse wire 5 of the respective tray section 1, 2.

The locking tongue 126 is substantially identical to that described above with reference to the embodiment shown in Figures 1 to 3. Also in this case, the locking tongue 126 in fact preferably has a T-shaped configuration including a shank portion 126a which extends substantially perpendicularly relative to the base plate 112 and lies in a substantially vertical plane, and a pair of locking tabs 126b which advantageously lie in the same plane as the shank portion 126a and extend perpendicularly relative to the direction in which the shank portion 126a extends, from a free end of this latter. Otherwise, the same remarks made above with reference to the embodiment of Figures 1 to 3 remain valid.

The connecting device 100 according to the invention can also easily be produced by punching and bending from a flat semi-finished sheet-metal product and can thus be manufactured at low cost.

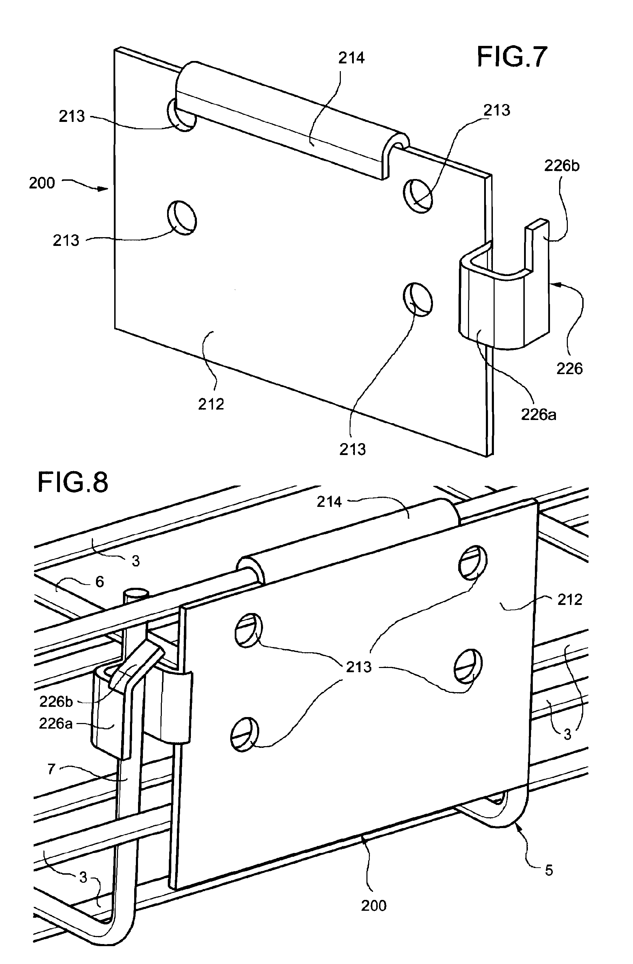

A variant of embodiment of the quick-fit connecting device according to the invention, which is designed for the fitting of an accessory on a mesh cable tray, will now be described with reference to Figures 7 and 8.

According to this variant of embodiment, the quick-fit connecting device, which is generally indicated 200, is constructed as a single sheet-metal component, forming integrally:
a substantially rectangular base plate 212 which, in the fitted condition, extends longitudinally relative to the tray and is disposed outside the tray, bearing against the longitudinal wires 3 of a side wall thereof, the base plate having a plurality of through-holes 213 for the insertion of screw connection members (not shown) by means of which an accessory (also not shown), such as, for example, a branch box, can be fixed to the base plate 212 and hence to the tray,
a curved engagement portion 214 which extends from the upper longitudinal edge of the base plate 212 so as to extend at least partially around a longitudinal portion of wire of the tray, and
a locking tongue 226 which extends laterally from an intermediate portion of the vertical side edge of the base plate 212 and comprises a substantially U-shaped shank portion 226a forming a seat suitable for receiving and longitudinally restraining a vertical portion of a transverse wire, and a locking tab 226b which projects vertically (upwards in the embodiment shown) from the free end of the shank portion 226a and can be bent inwardly relative to the U-shaped seat by cold plastic deformation in order to restrain the said transverse wire portion transversely from the outside, as shown in Figure 8.

According to a variant of embodiment, not shown, the locking tongue may also be suitably shaped so as to restrain a portion of longitudinal wire by means of a bendable locking tab.

The connecting device 200 according to the invention can also easily be produced by punching and bending from a flat semi-finished sheet-metal product and can thus be manufactured at low cost.

Naturally, the principle of the invention remaining the same, the embodiments and details of construction may be varied widely with respect to those described and illustrated purely by way of non-limiting example.

## Claims

1. A quick-fit connecting device (10; 110; 210) for mesh cable trays comprising a plurality of longitudinal wires (3) and a plurality of transverse wires (5) connected to one another to form a grid, wherein each transverse wire (5) includes a horizontal base portion (6) and a pair of vertical side portions (7) which extend from the opposite ends of the base portion (6) so that each transverse wire (5) is generally U-shaped, the device (10) being constructed as a single sheet-metal component forming integrally a base plate (12; 112; 212) which is elongate in a longitudinal direction and locking means (16, 18, 20, 22, 26; 114, 115, 116, 118, 120, 122, 126; 226) suitable for longitudinally and transversely locking at least one portion (6, 7) of transverse wire (5), wherein said locking means include at least one seat (16, 18, 20, 22; 120, 122; 226a) suitable for housing said at least one portion (6, 7) of transverse wire (5) and for locking it longitudinally in both directions and transversely on the side of the base plate (12; 112; 212), and at least one locking tab (26b; 126b; 226b) which is arranged to be turned by plastic deformation to a locking position in which it locks the at least one portion (6, 7) of transverse wire (5) transversely on the side remote from the base plate (12; 112; 212),
the device being **characterized in that** at least one locking tab (26b; 126b; 226b) is part of a locking tongue (26; 126; 226) formed integrally by the connecting device (10),
and **in that** said locking tongue (26; 126; 226) further comprises a shank portion (26a; 126a; 226a) which is connected at a first of its ends to the base plate (12; 112; 212), and from the opposite end of which said at least one locking tab (26b, 126b; 226b) extends.

2. A device (10; 110; 210) according to Claim 1, in which the shank portion (26a; 126a; 226a) of the locking tongue (26; 126; 226) extends from a vertically intermediate portion of the base plate (12; 112; 212).

3. A device (10; 110) according to Claim 1 or Claim 2, in which the locking tongue (26; 126) lies substantially in a plane perpendicular to the base plate (12; 112).

4. A device (10; 110) according to any one of the preceding claims, in which the locking tongue (26; 126) extends from a longitudinally central portion of the base plate (12; 112).

5. A device (10; 110) according to Claim 2, in which the locking tongue (26; 126) has a substantially T-shaped configuration with a pair of locking tabs (26b; 126b) which extend substantially perpendicularly relative to the shank portion (16a; 126a), on opposite sides thereof.

6. A device (10; 110) according to any one of the preceding claims, in which said at least one seat (16, 18, 20, 22; 120, 122) is defined on one side by at least a pair of central tabs (16, 18; 116, 118), that is, an upper tab and a lower tab, which project from the opposite upper and lower longitudinal edges of the base plate (12; 112), respectively, and are arranged to lock the relative longitudinal movement towards one another of the end transverse wires (5) of two adjacent tray sections (1, 2) to be connected.

7. A device (10) according to Claim 6, in which said at least one seat (16, 18, 20, 22) is defined on the other side by at least one pair of lateral tabs (20) which project from the base plate (12) on longitudinally opposite sides of said at least one pair of central tabs (16, 18) and are arranged to lock the relative longitudinal movement away from one another of the end transverse wires (5) of two tray sections (1, 2) to be connected.

8. A device (10) according to Claim 7, in which the locking tongue (26) is interposed vertically between said at least one pair of lateral tabs (20) and said lower central tab (18).

9. A device (110) according to Claim 6, in which said at least one seat (120, 122) is defined on the other side by a pair of lateral flanges (114, 115), that is, an upper flange and a lower flange, which extend from the opposite upper and lower longitudinal edges of the base plate (112), respectively, on longitudinally opposite sides of said at least one pair of central tabs (116, 118) and are arranged to lock the relative longitudinal movement away from one another of the end transverse wires (5) of the two adjacent tray sections (1, 2) to be connected.

10. A device (210) according to Claim 1 or Claim 2, in which the shank portion (226a) of the locking tongue (226) extends from a vertical side edge of the base plate (212) and is substantially U-shaped, defining said at least one seat suitable for housing said at least one portion (6, 7) of transverse wire (5).

11. A device (210) according to Claim 10, in which the base plate (212) has a plurality of through-holes (213) for the insertion of screw connection members by means of which an accessory of the cable tray, such as a branch box, can be fixed to the base plate (212).
